# FASCICULE DE BREVET EUROPEEN

(11) **EP 3 019 344 B1**
(45) Date de publication et mention de la délivrance du brevet: **23.10.2019**
(21) Numéro de dépôt: 14739123.9
(22) Date de dépôt: 09.07.2014
(51) Int. Cl.: B60C 9/22, B60C 9/20

(54) **PNEUMATIQUE COMPORTANT UNE ARMATURE DE CARCASSE ASSOUPLIE**
LUFTREIFEN MIT EINER ERWEICHTEN KARKASSENVERSTÄRKUNG
AIR TYRE HAVING A SOFTENED CARCASS REINFORCEMENT

(30) Priorité: 12.07.2013 FR 1356857
(43) Date de publication de la demande: 18.05.2016
(73) Titulaire: Compagnie Générale des Etablissements Michelin, 63000 Clermont-Ferrand (FR)
(72) Inventeur: FOUCHER, Benoît, F-63040 Clermont-Ferrand Cedex 9 (FR)
(74) Mandataire: Le Cam, Stéphane Georges Elie
(86) Numéro de dépôt international: PCT/EP2014/064755
(87) Numéro de publication internationale: WO 2015/004205

(56) Documents cités:
- EP-A2- 1 126 074
- WO-A1-2006/013077
- WO-A1-2007/003548
- WO-A1-2007/003558
- FR-A1- 2 950 838
- US-A- 4 305 446

## Description

La présente invention concerne un pneumatique, à armature de carcasse radiale et plus particulièrement un pneumatique destiné à équiper des véhicules portant de lourdes charges, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette couche, dite de triangulation, étant radialement située entre l'armature de carcasse et la première couche de sommet dite de travail, formées de fils ou câbles parallèles présentant des angles au plus égaux à 45° en valeur absolue. La couche de triangulation forme avec au moins ladite couche de travail une armature triangulée, qui présente, sous les différentes contraintes qu'elle subit, peu de déformations, la couche de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa) et d'allongement à la rupture (allongement total en %) sont effectuées en traction selon la norme ISO 6892 de 1984.

Certains pneumatiques actuels, dits "routiers", sont destinés à rouler à des vitesses moyennes élevées et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre. Cette augmentation de la durée de vie en termes kilométriques, conjuguée au fait que de telles conditions d'usage sont susceptibles de se traduire, sous forte charge, par des températures sommet relativement élevées, nécessite une augmentation au moins proportionnelle du potentiel d'endurance de l'armature sommet des pneumatiques.

Il existe en effet des contraintes au niveau de l'armature de sommet et plus particulièrement des contraintes de cisaillement entre les couches de sommet qui, dans le cas d'une trop forte élévation de la température de fonctionnement au niveau des extrémités de la couche de sommet axialement la plus courte, ont pour conséquence l'apparition et la propagation de fissures dans la gomme au niveau desdites extrémités. Le même problème existe dans le cas de bords de deux couches d'éléments de renforcement, ladite autre couche n'étant pas obligatoirement radialement adjacente à la première.

Dans le but d'améliorer l'endurance de l'armature sommet des pneumatiques, la demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

En complément, la demande française WO 99/24269 propose notamment, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

La couche d'éléments de renforcement circonférentiels est usuellement constituée par au moins un câble métallique enroulé pour former une spire dont l'angle de pose par rapport à la direction circonférentielle est inférieur à 8°. Les câbles initialement fabriqués sont enduits d'un mélange caoutchouteux avant d'être mis en place. Ce mélange caoutchouteux vient ensuite pénétrer le câble sous l'effet de la pression et de la température lors de la cuisson du pneumatique.

Les documents WO 07/003548 et WO 07/003558 proposent encore une armature de sommet comportant dans chaque épaule au moins une couche d'éléments de renforcement, parallèles entre eux dans la couche et orientés circonférentiellement.

Le document EP 1 126 074 A2 décrit une armature de carcasse comportant des câbles de faibles diamètres constitués de fils de diamètre réduit dont certains sont ondulés pour favoriser la pénétration des mélanges.

Les résultats obtenus avec ce type de réalisations sont le plus souvent satisfaisants en termes d'endurance et d'usure lors de roulages prolongés sur routes à grande vitesse. Toutefois, il apparaît que dans certaines conditions de roulage, notamment dans le cas de surcharges, certains pneumatiques présentent parfois des faiblesses en termes d'endurance de l'armature de carcasse.

Le document FR 2 950 838 décrit l'utilisation de câbles d'armature de carcasse constitués de fils de diamètres supérieurs ou égaux à 0.175 mm.

Un but de l'invention est de fournir des pneumatiques pour véhicules "Poids-Lourds", dont les performances d'endurance et d'usure sont conservées, voire améliorées, pour des usages routiers quelles que soient les conditions d'usage.

Ce but est atteint selon l'invention par un pneumatique à armature de carcasse radiale comprenant une armature de sommet formée d'au moins deux couches de sommet de travail d'éléments de renforcement, croisés d'une couche à l'autre en faisant avec la direction circonférentielle des angles compris entre 10° et 45°, elle-même coiffée radialement d'une bande de roulement, ladite bande de roulement étant réunie à deux bourrelets par l'intermédiaire de deux flancs, ledit pneumatique comprenant additionnellement dans chaque épaule au moins une extrémité d'une couche d'éléments de renforcement, parallèles entre eux dans la couche et orientés circonférentiellement, ladite extrémité de ladite couche additionnelle d'éléments de renforcement, parallèles entre eux dans la couche et orientés circonférentiellement, étant axialement extérieure auxdites au moins deux couches de sommet de travail, les éléments de renforcement de l'armature de carcasse présentant un diamètre inférieur à 0.85 mm, et lesdits éléments de renforcement de l'armature de carcasse étant composés de fils de diamètre inférieur à 0.16 mm.

Au sens de l'invention, une extrémité de ladite couche additionnelle d'éléments de renforcement, parallèles entre eux dans la couche et orientés circonférentiellement, est axialement extérieure auxdites au moins deux couches de sommet de travail signifie que ladite extrémité est axialement extérieure aux extrémités desdites au moins deux couches de sommet de travail et/ou à tous points desdites au moins deux couches de sommet de travail.

Au sens de l'invention, des éléments parallèles entre eux dans la couche et orientés circonférentiellement peuvent être des éléments de renforcement rectilignes ou des éléments de renforcement orientés principalement selon une direction circonférentielle et ondulés autour de cette direction principale.

De préférence encore, les éléments de renforcement des couches additionnelles d'éléments de renforcement, parallèles entre eux dans la couche et orientés circonférentiellement sont des câbles métalliques.

Au sens de l'invention encore, les couches additionnelles peuvent être des couches continues sur toute la largeur ou bien des couches interrompues, telles que des nappes étroites placées au niveau des épaules.

Lesdites couches additionnelles peuvent encore au sens de l'invention être positionnées radialement à l'intérieur desdites au moins deux couches de sommet de travail, radialement à l'extérieur desdites au moins deux couches de sommet de travail ou bien encore entre lesdites au moins deux couches de sommet de travail.

Avantageusement selon l'invention, lorsque les couches additionnelles sont discontinues, les extrémités axialement intérieures de chacune desdites couches additionnelles sont radialement adjacentes au bord d'une couche de sommet de travail.

Les pneumatiques conformes à l'invention présentent effectivement des performances en termes d'endurance améliorées notamment pour ce qui concerne l'évolution des masses polymériques environnant les extrémités de l'armature de sommet du fait notamment de la présence au moins dans chaque épaule d'au moins une couche d'éléments de renforcement, parallèles entre eux dans la couche et orientés circonférentiellement.

D'autre part, les inventeurs ont su mettre en évidence que l'augmentation de la rigidité circonférentielle due à la présence dans chaque épaule d'au moins une couche d'éléments de renforcement, parallèles entre eux dans la couche et orientés circonférentiellement, permet de maintenir une usure régulière notamment lors de roulage en surcharge.

Par ailleurs, les inventeurs ont su mettre en évidence que dans chaque épaule, l'extrémité axialement extérieure de ladite couche additionnelle d'éléments de renforcement, parallèles entre eux dans la couche et orientés circonférentiellement, confère localement une rigidité circonférentielle formant un point caractéristique dans tout plan méridien du pneumatique. Notamment lors de roulages en surcharge, ce point caractéristique peut conduire à des déformations cycliques de l'armature de carcasse jusqu'à conduire à des fatigues inacceptables des éléments de renforcement de l'armature de carcasse lorsqu'il s'agit d'éléments de renforcement usuels. Les éléments de renforcement usuels d'une armature de carcasse présentent un diamètre en général supérieur à 0.90 mm et sont constitués de fils de diamètre supérieur ou égal à 0.18 mm. Des éléments de renforcement de l'armature de carcasse présentant un diamètre inférieur à 0.85 mm, lesdits éléments de renforcement étant composés de fils de diamètre inférieur à 0.16 mm, conformément à l'invention, semblent permettre au pneumatique de supporter les sollicitations cycliques générées du fait de la présence de ladite couche additionnelle d'éléments de renforcement, parallèles entre eux dans la couche et orientés circonférentiellement, sans voir apparaitre aucun signe de fatigue desdits éléments de renforcement de l'armature de carcasse, y compris lors de roulage en surcharge.

Les résultats obtenus avec les pneumatiques selon l'invention ont donc mis en évidence qu'ils permettent de maintenir des propriétés d'endurance et d'usure satisfaisantes lors de roulages quelles que soient les conditions et notamment en cas de surcharge. De la même façon il apparait que les pneumatiques selon l'invention utilisés dans des conditions de pression de gonflage réduites présentent des performances en termes d'usure et d'endurance tout à fait satisfaisantes.

Selon un mode de réalisation préférée de l'invention, les éléments de renforcement d'au moins une couche de l'armature de carcasse sont des câbles métalliques présentant au test dit de perméabilité un débit inférieur 20 cm³/mn.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est réalisé sur des câbles extraits directement, par décorticage, des nappes de caoutchouc vulcanisées qu'ils renforcent, donc pénétrés par le caoutchouc cuit.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm³/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de ± 0,2 cm³/min, les valeurs mesurées inférieures ou égales à 0,2 cm³/min sont considérées comme nulles ; elles correspondent à un câble qui peut être qualifié d'étanche (totalement étanche) à l'air selon son axe (i.e., dans sa direction longitudinale).

Ce test de perméabilité constitue en outre un moyen simple de mesure indirecte du taux de pénétration du câble par une composition de caoutchouc. Le débit mesuré est d'autant plus faible que le taux de pénétration du câble par le caoutchouc est élevé.

Des câbles présentant au test dit de perméabilité un débit inférieur à 20 cm3/mn présentent un taux de pénétration supérieure à 66%.

Le taux de pénétration d'un câble peut encore être estimé selon la méthode décrite ci-après. Dans le cas d'un câble à couches, la méthode consiste dans un premier temps à éliminer la couche extérieure sur un échantillon d'une longueur comprise entre 2 et 4 cm pour ensuite mesurer selon une direction longitudinale et selon un axe donné la somme des longueurs de mélange caoutchouteux rapporté sur la longueur de l'échantillon. Ces mesures de longueurs de mélange caoutchouteux excluent les espaces non pénétrés sur cet axe longitudinal. Ces mesures sont répétées sur trois axes longitudinaux répartis sur la périphérie de l'échantillon et répétées sur cinq échantillons de câbles.

Lorsque le câble comporte plusieurs couches, la première étape d'élimination est répétée avec la couche nouvellement extérieure et les mesures de longueurs de mélange caoutchouteux selon des axes longitudinaux.

Une moyenne de tous les rapports de longueurs de mélange caoutchouteux sur les longueurs des échantillons ainsi déterminés est ensuite effectuée pour définir le taux de pénétration du câble.

Les câbles de l'armature de carcasse qui sont soumis à des phénomènes de fatigue, ainsi définis selon ce mode de réalisation préféré de l'invention, peuvent présenter une meilleure résistance à ces phénomènes d'usure et de fatigue du fait de leur taux de pénétration par les mélanges caoutchouteux et donc contribuer à améliorer l'endurance du pneumatique notamment utilisée dans des conditions extrêmes.

Les éléments de renforcement métalliques d'au moins une couche de l'armature de carcasse sont des câbles à au moins deux couches, au moins une couche interne étant gainée d'une couche constituée d'une composition polymérique telle qu'une composition de caoutchouc non réticulable, réticulable ou réticulée, de préférence à base d'au moins un élastomère diénique.

Des câbles dits "à couches" (*"layered cords"*) ou "multicouches" sont des câbles constitués d'un noyau central et d'une ou plusieurs couches de brins ou fils pratiquement concentriques disposées autour de ce noyau central.

Selon un mode de réalisation préféré de l'invention, les câbles de l'armature de carcasse présentent au test dit de perméabilité un débit inférieur à 10 cm³/mn et de préférence encore inférieur à 2 cm³/mn.

Au sens de l'invention, des câbles, à au moins deux couches, au moins une couche interne étant gainée d'une couche constituée d'une composition polymérique présentent au test dit de perméabilité un débit inférieur à 20 cm3/mn et avantageusement inférieur à 2 cm3/mn.

Par l'expression "composition à base d'au moins un élastomère diénique", on entend de manière connue que la composition comprend à titre majoritaire (i.e. selon une fraction massique supérieure à 50%) ce ou ces élastomères diéniques.

On notera que la gaine selon l'invention s'étend d'une manière continue autour de la couche qu'elle recouvre (c'est-à-dire que cette gaine est continue dans la direction "orthoradiale" du câble qui est perpendiculaire à son rayon), de manière à former un manchon continu de section transversale qui est avantageusement pratiquement circulaire.

On notera également que la composition de caoutchouc de cette gaine peut être réticulable ou réticulée, c'est-à-dire qu'elle comprend par définition un système de réticulation adapté pour permettre la réticulation de la composition lors de sa cuisson (i.e., son durcissement et non sa fusion) ; ainsi, cette composition de caoutchouc peut être qualifiée d'infusible, du fait qu'elle ne peut pas être fondue par chauffage à quelque température que ce soit.

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De préférence, le système de réticulation de la gaine de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus.

La composition de caoutchouc de la gaine selon l'invention peut comprendre, outre ledit système de réticulation, tous les ingrédients habituels utilisables dans les compositions de caoutchouc pour pneumatiques, tels que des charges renforçantes à base de noir de carbone et/ou d'une charge inorganique renforçante telle que silice, des agents anti-vieillissement, par exemple des antioxydants, des huiles d'extension, des plastifiants ou des agents facilitant la mise en œuvre des compositions à l'état cru, des accepteurs et donneurs de méthylène, des résines, des bismaléimides, des systèmes promoteurs d'adhésion connus du type "RFS" (résorcinol-formaldéhyde-silice) ou sels métalliques, notamment des sels de cobalt.

A titre préférentiel, la composition de cette gaine est choisie identique à la composition utilisée pour la matrice de caoutchouc que les câbles selon l'invention sont destinés à renforcer. Ainsi, il n'y a aucun problème d'incompatibilité éventuelle entre les matériaux respectifs de la gaine et de la matrice de caoutchouc.

Selon une variante de l'invention, les éléments de renforcement métalliques d'au moins une couche de l'armature de carcasse sont des câbles métalliques à couches de construction [L+M] ou [L+M+N] utilisable comme élément de renforcement d'une armature de carcasse de pneumatique, comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20, une gaine constituée d'une composition de caoutchouc non réticulable, réticulable ou réticulée à base d'au moins un élastomère diénique, recouvrant, dans la construction [L+M], ladite première couche C1 et, dans la construction [L+M+N], au moins ladite couche C2.

De préférence, le diamètre des fils de la première couche de la couche interne (C1) est compris entre 0.10 et 0.5 mm et le diamètre des fils des couches externes (C2, C3) est compris entre 0.10 et 0.5 mm.

De préférence encore, le pas d'hélice d'enroulement desdits fils de la couche externe (C3) est compris entre 8 et 25 mm.

Au sens de l'invention, le pas d'hélice représente la longueur, mesurée parallèlement à l'axe du câble, au bout de laquelle un fil ayant ce pas effectue un tour complet autour de l'axe du câble ; ainsi, si l'on sectionne l'axe par deux plans perpendiculaires audit axe et séparés par une longueur égale au pas d'un fil d'une couche constitutive du câble, l'axe de ce fil a dans ces deux plans la même position sur les deux cercles correspondant à la couche du fil considéré.

Avantageusement, le câble présente l'une, et plus préférentiellement encore l'ensemble des caractéristiques suivantes qui est vérifié(e) :
- la couche C3 est une couche saturée, c'est-à-dire qu'il n'existe pas suffisamment de place dans cette couche pour y ajouter au moins un (N+1)ème fil de diamètre d₃, N représentant alors le nombre maximal de fils enroulables en une couche autour de la couche C2 ;
- la gaine de caoutchouc recouvre en outre la couche interne C1 et/ou sépare les fils deux à deux adjacents de la couche intermédiaire C2 ;
- la gaine de caoutchouc recouvre pratiquement la demi-circonférence radialement intérieure de chaque fil de la couche C3, de telle sorte qu'elle sépare les fils deux à deux adjacents de cette couche C3.

De préférence, la gaine de caoutchouc présente une épaisseur moyenne allant de 0,010 mm à 0,040 mm.

D'une manière générale, l'invention peut être mise en œuvre, pour former les câbles de l'armature de carcasse ci-dessus décrits, avec tout type de fils métalliques, notamment en acier, par exemple des fils en acier au carbone et/ou des fils en acier inoxydable. On utilise de préférence un acier au carbone, mais il est bien entendu possible d'utiliser d'autres aciers ou d'autres alliages.

Lorsqu'un acier au carbone est utilisé, sa teneur en carbone (% en poids d'acier) est de préférence comprise entre 0,1% et 1,2%, plus préférentiellement de 0,4% à 1,0% ; ces teneurs représentent un bon compromis entre les propriétés mécaniques requises pour le pneumatique et la faisabilité du fil. Il est à noter qu'une teneur en carbone comprise entre 0,5% et 0,6% rend de tels aciers finalement moins coûteux car plus faciles à tréfiler. Un autre mode avantageux de réalisation de l'invention peut consister aussi, selon les applications visées, à utiliser des aciers à faible teneur en carbone, comprise par exemple entre 0,2% et 0,5%, en raison notamment d'un coût plus bas et d'une plus grande facilité de tréfilage.

Le câble selon l'invention pourra être obtenu selon différentes techniques connues de l'homme du métier, par exemple en deux étapes, tout d'abord par gainage via une tête d'extrusion de l'âme ou structure intermédiaire L+M (couches C1+C2), étape suivie dans un deuxième temps d'une opération finale de câblage ou retordage des N fils restants (couche C3) autour de la couche C2 ainsi gainée. Le problème de collant à l'état cru posé par la gaine de caoutchouc, lors des opérations intermédiaires éventuelles de bobinage et débobinage pourra être résolu de manière connue par l'homme du métier, par exemple par l'emploi d'un film intercalaire en matière plastique.

De tels câbles d'au moins une couche d'armature de carcasse sont par exemple choisis parmi les câbles décrits dans les demandes de brevet WO 2005/071157, WO 2010/012411, WO 2010/054790 et WO 2010/054791.

Selon une variante de l'invention, dans un plan radial, le rapport entre les épaisseurs de mélange caoutchouteux entre la surface intérieure de la cavité du pneumatique et le point d'un élément de renforcement métallique de l'armature de carcasse le plus proche de la dite surface intérieure de la cavité, des deux parties du profil du pneumatique, centrées sur les projections orthogonales respectives, sur la surface intérieure de la cavité du pneumatique, des extrémités axialement extérieures de la couche additionnelle d'éléments de renforcement, parallèles entre eux dans la couche et orientés circonférentiellement, et des parties du profil du pneumatique présentant les épaisseurs les plus faibles est supérieur à 1.15 et de préférence supérieur à 1.35.

L'épaisseur de mélange caoutchouteux entre la surface intérieure de la cavité du pneumatique et le point d'un élément de renforcement le plus proche de la dite surface est égale à la longueur de la projection orthogonale de l'extrémité du point d'un élément de renforcement le plus proche de la dite surface sur la surface intérieure de la cavité du pneumatique.

Les mesures d'épaisseur de mélange caoutchouteux sont effectuées sur une coupe transversale d'un pneumatique, le pneumatique étant donc dans un état non gonflé.

Selon cette variante de l'invention, les deux parties du profil du pneumatique, en regard des extrémités axialement extérieures desdites couches additionnelles, présentent des surépaisseurs de mélange caoutchouteux entre la surface intérieure de la cavité du pneumatique et le point d'un élément de renforcement métallique de l'armature de carcasse le plus proche de la dite surface intérieure de la cavité.

La présence de ces surépaisseurs permet localement de freiner le passage de l'air de gonflage en direction des éléments de renforcement de l'armature de carcasse et de limiter l'usure desdits éléments de renforcement sollicités de manière cyclique, la présence de l'oxygène accentuant ces phénomènes de fatigue.

Par ailleurs, il semble que la présence de ces surépaisseurs augmente la rigidité de ces zones du pneumatique et peuvent contribuer à limiter les déformations cycliques précédemment évoquées et donc contribuer à améliorer les performances en matière d'endurance.

Ces surépaisseurs peuvent être obtenues de différentes façons lors de la fabrication du pneumatique. Une première méthode consiste à réaliser la couche de mélange caoutchouteux formant la paroi de la cavité du pneumatique avec le profil souhaité pour former ces surépaisseurs. Ce mélange formant habituellement la couche d'étanchéité du pneumatique, les zones de surépaisseurs constituent d'autant mieux un barrage au passage de l'air de gonflage. Une autre méthode consiste à réaliser ces zones de surépaisseurs par l'ajout de couches de mélanges caoutchouteux supplémentaires localement ; il est alors possible de choisir un matériau semblable à celui formant la paroi de la cavité du pneumatique pour contribuer assurément à la fonction étanchéité ou bien un matériau dont les propriétés sont différentes et notamment une plus grande rigidité pour augmenter la rigidité de ces zones.

De préférence, les épaisseurs de mélange caoutchouteux entre la surface intérieure de la cavité du pneumatique et le point d'un élément de renforcement métallique de l'armature de carcasse le plus proche de la dite surface intérieure de la cavité desdites deux parties du profil du pneumatique, centrées sur les projections orthogonales respectives des extrémités axialement extérieures desdites couches additionnelles, sont supérieures à 3.5 mm et de préférence supérieure à 4 mm.

De préférence encore, les longueurs méridiennes desdites parties du profil du pneumatique dont les épaisseurs de mélange caoutchouteux entre la surface intérieure de la cavité du pneumatique et le point d'un élément de renforcement métallique de l'armature de carcasse le plus proche de la dite surface intérieure de la cavité sont plus importantes sont comprises entre 10 et 40 mm.

Dans le cas notamment de couches additionnelles interrompues présentent au niveau des épaules du pneumatique, selon une variante de l'invention, l'armature de sommet comporte au moins une couche d'éléments de renforcement circonférentiels, avantageusement entre lesdites au moins deux couches de sommet de travail.

Selon un mode de réalisation avantageux de l'invention, les éléments de renforcement de ladite au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement, la contrainte de traction correspondant à la tension mesurée, avec une pré-tension de 5N, ramenée à la section de métal de l'élément de renforcement.

Selon un mode de réalisation préféré, les éléments de renforcements d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la couche d'éléments de renforcement circonférentiels sont habituellement dénommés éléments "bi-module".

Selon une réalisation préférée de l'invention, la pente sensiblement constante et forte apparaît à partir d'un allongement relatif compris entre 0,4% et 0,7%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de construction 3x(0.26+6x0.23) 5.0/7.5 SS. Un tel câble présente un module sécant à 0,7 % égal à 45 GPa et un module tangent maximum égal à 100 GPa, mesurés sur une courbe contrainte de traction en fonction de l'allongement, la contrainte de traction correspondant à la tension mesurée, avec une pré-tension de 5N, ramenée à la section de métal de l'élément de renforcement, de 0.98 mm² dans le cas de l'exemple considéré.

Selon un deuxième mode de réalisation de l'invention, les éléments de renforcement circonférentiels peuvent être formées d'éléments métalliques et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche d'éléments de renforcement circonférentiels est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche d'éléments de renforcement circonférentiels étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport a/λ de l'amplitude d'ondulation sur la longueur d'onde étant au plus égale à 0,09. De préférence, le module d'élasticité à la traction par unité de largeur de la couche d'éléments de renforcement circonférentiels est inférieur au module d'élasticité à la traction, mesuré dans les mêmes conditions, de la couche de sommet de travail la plus extensible.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments de la couche de travail qui lui est radialement adjacente.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement métalliques en acier faisant, avec la direction circonférentielle, un angle supérieur à 50° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention en référence aux figures 1 à 4 qui représentent :
- figure1, une vue méridienne d'un schéma d'un pneumatique selon un mode de réalisation de l'invention,
- figure 2, une vue méridienne d'un schéma d'un pneumatique selon un deuxième mode de réalisation de l'invention
- figure 3, une vue partielle agrandie d'une partie du schéma de la figure 2,
- figure 4, une vue partielle agrandie d'une autre partie du schéma de la figure 2.

Les figures ne sont pas représentées à l'échelle pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

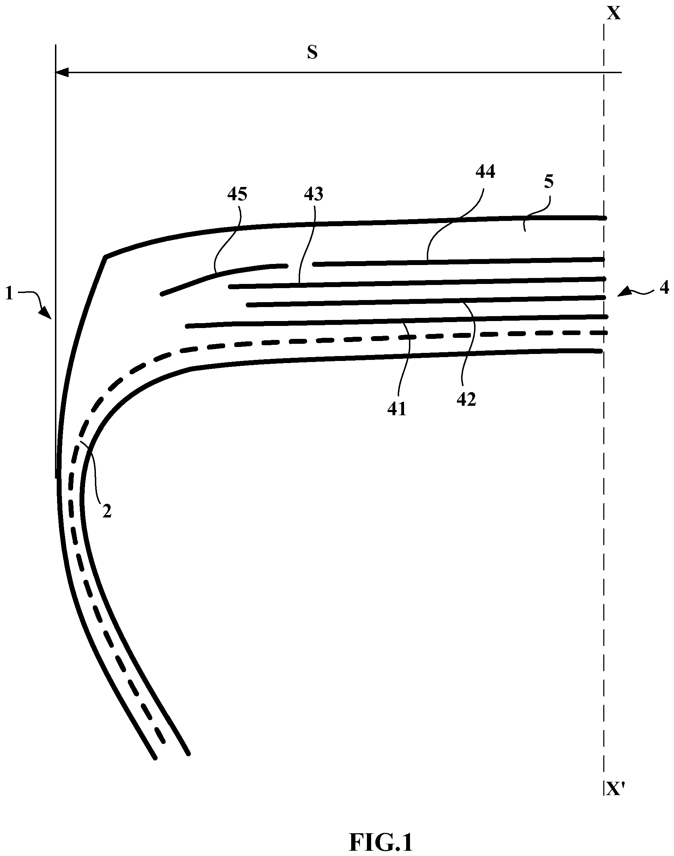

Sur la figure 1, le pneumatique 1, de dimension 315/70 R 22.5, a un rapport de forme H/S égal à 0,70, H étant la hauteur du pneumatique 1 sur sa jante de montage et S sa largeur axiale maximale. Ledit pneumatique 1 comprend une armature de carcasse radiale 2 ancrée dans deux bourrelets, non représentés sur la figure. L'armature de carcasse est formée d'une seule couche de câbles métalliques. Cette armature de carcasse 2 est frettée par une armature de sommet 4, formée radialement de l'intérieur à l'extérieur :
- d'une première couche de travail 41 formée de câbles métalliques inextensibles non frettés, de construction 1x0.12+3x0.35+8x0.35 7.7/15.4 SS, formant avec la direction circonférentielle au niveau du plan équatorial un angle égal à 25°.
- d'une couche d'éléments de renforcement circonférentiels 42 formée de câbles métalliques en acier de type "bi-module", de construction 3x(0.26+6x0.23) 5/7.5 SS,
- d'une seconde couche de travail 43 formée de câbles métalliques inextensibles non frettés, de construction 1x0.12+3x0.35+8x0.35 7.7/15.4 SS, formant avec la direction circonférentielle au niveau du plan équatorial un angle égal à 25° et croisés avec les câbles métalliques de la couche 41,
- d'une couche de protection 44 formées de câbles métalliques élastiques de construction 3x2x0.35 4/6 SS,
- d'une couche additionnelle 45 formée de câbles métalliques de type "bi-module", de construction 3x(0.26+6x0.23) 5/7.5 SS, orientés circonférentiellement ; la couche 45 est radialement extérieure et adjacente à la couche de travail radialement extérieure 43 et s'étend axialement au-delà de l'extrémité axialement extérieure de la couche 41.

La largeur axiale L41 de la première couche de travail 41 est égale à 234 mm.

La largeur axiale L42 de la couche d'éléments de renforcement circonférentiels 42 est égale à 196 mm.

La largeur axiale L43 de la deuxième couche de travail 43 est égale à 216 mm.

La couche additionnelle 45 d'élément de renforcement circonférentiels présente une largeur égale à 32 mm ; elle présente une zone de recouvrement axiale avec la couche 43 égale à 18 mm.

L'armature de sommet est elle-même coiffée d'une bande de roulement 5.

Selon cette réalisation de l'invention représentée sur la figure 1, la couche additionnelle est radialement extérieure et adjacente à la couche de travail 43. Selon d'autres modes de réalisation d l'invention, la couche additionnelle peut être intercalé entre les couches de travail, adjacentes à l'une ou l'autre des couches de travail 41, 43 ou radialement intérieure à la couche de travail radialement la plus intérieure 41.

Comme expliqué précédemment, selon d'autres modes de réalisation de l'invention la couche additionnelle peut être continue selon la direction axiale du pneumatique, la couche 42 d'éléments de renforcement circonférentiels pouvant bien entendu ne pas être présente.

La couche 42 d'éléments de renforcement circonférentiels qui contribue aux performances d'endurance participe en outre à l'amélioration notamment de la résistance à l'usure du pneumatique, du fait de l'augmentation des rigidités. Elle permet encore d'améliorer la stabilité du sommet du pneumatique lors du gonflage. En outre, la couche additionnelle 45 couvre avantageusement les extrémités de ladite couche 42 d'éléments de renforcement circonférentiels et améliore ainsi l'endurance des éléments de renforcement circonférentiels. La largeur de recouvrement est avantageusement supérieure à quatre fois le pas des éléments de renforcement circonférentiels de la couche 42.

Selon le mode de réalisation conforme à la figure 1, la couche de protection 44 est axialement intercalée entre les couches additionnelles 45.

Concernant l'armature de carcasse, conformément à l'invention, les éléments de renforcement sont des câbles métalliques de construction 1x0.15+6x0.15+12x0.15 10/10 ZZ.

De tels câbles présentent un diamètre égal à 0.76 mm.

Conformément à l'invention, les câbles de l'armature de carcasse qui présente un diamètre inférieur à 0.85 mm, et qui sont composés de fils de diamètre inférieur à 0.16 mm, permettent de réaliser des pneumatiques sont les performances en termes d'endurance sont satisfaisantes quelles que soient les conditions de roulage et notamment en cas de surcharge ou bien lors de roulage en mode sous-gonflé.

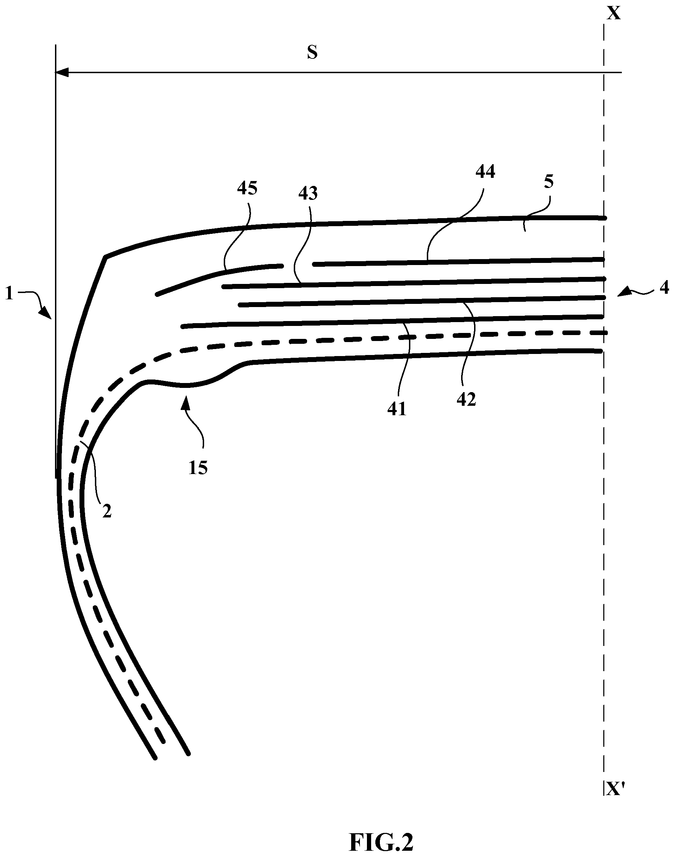

La figure 2 illustre une variante de réalisation de l'invention selon laquelle les parties du profil du pneumatique, en regard des extrémités axialement extérieures des couches additionnelles 45 présentent des surépaisseurs 15 de mélange caoutchouteux entre la surface intérieure de la cavité du pneumatique et l'armature de carcasse.

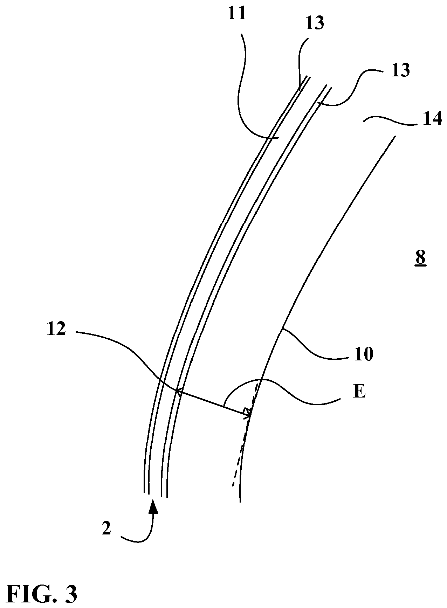

La figure 3 illustre un agrandissement d'une zone de la figure 2 ne comportant pas de surépaisseur et indique notamment l'épaisseur E de mélange caoutchouteux entre la surface intérieure 10 de la cavité 8 du pneumatique et le point 12 d'un élément de renforcement 11 le plus proche de ladite surface 10. Cette épaisseur E correspond à une zone du pneumatique dont l'épaisseur de mélange caoutchouteux est la plus faible. Cette épaisseur E est égale à la longueur de la projection orthogonale du point 12 d'un élément de renforcement 11 le plus proche de ladite surface 10 sur la surface 10. Cette épaisseur E est la somme des épaisseurs des différents mélanges caoutchouteux mis en place entre ledit élément de renforcement 11 de l'armature de carcasse 2 ; il s'agit d'une part de l'épaisseur de la couche de calandrage 13 radialement intérieure de l'armature de carcasse et d'autre part, de l'épaisseur du ou des mélanges caoutchouteux 14 formant la paroi interne du pneumatique 1.

Les mesures d'épaisseur sont effectuées sur une coupe transversale du pneumatique, celui-ci étant par conséquent non monté et non gonflé.

La valeur de E mesurée est égale à 3.6 mm.

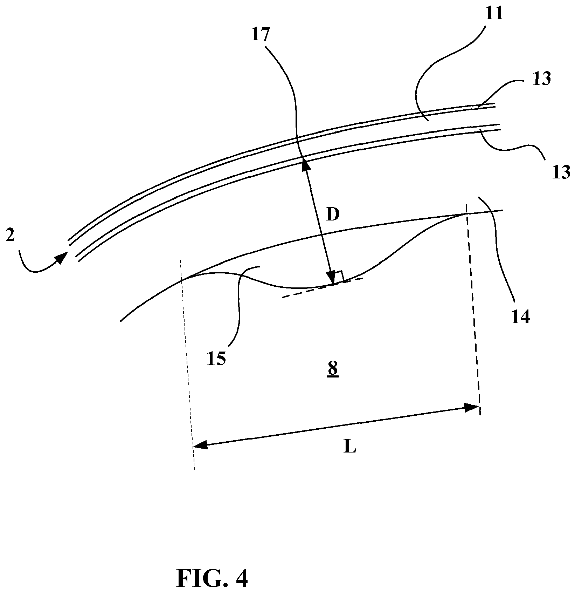

La figure 4 illustre une zone de la figure 2 comportant une surépaisseur 15 et indique notamment l'épaisseur D de mélange caoutchouteux entre la surface intérieure 10 de la cavité 8 du pneumatique et le point 17 d'un élément de renforcement 11 le plus proche de ladite surface 10 au niveau de la surépaisseur 15. Cette épaisseur D est égale à la longueur de la projection orthogonale du point 17 d'un élément de renforcement 11 le plus proche de ladite surface 10 sur la surface 10 au lieu de la plus grande épaisseur au niveau de la surépaisseur 15. Cette épaisseur D est la somme des épaisseurs des différents mélanges caoutchouteux mis en place entre ledit élément de renforcement 11 de l'armature de carcasse 2 ; il s'agit d'une part de l'épaisseur de la couche de calandrage 13 radialement intérieure de l'armature de carcasse et d'autre part, de l'épaisseur du ou des mélanges caoutchouteux 14 formant la paroi interne du pneumatique 1.

L'épaisseur D au niveau de la partie 15 est égale à 4.3 mm et donc supérieure à 4 mm.

Le rapport des épaisseurs D sur E est égal à 1.20 et donc supérieur à 1.15.

La longueur L correspondant à la longueur méridienne de la surépaisseur 15 est égale à 20 mm et donc comprise entre 10 et 40 mm.

Des essais ont été réalisés avec le pneumatique réalisé selon l'invention, conformément à la représentation de la figure 1, et comparés avec un pneumatique de référence identique en dimension, comportant la même armature de sommet et comportant une armature de carcasse dont les câbles sont de formule 1x0.20+6x0.18+12x0.18 10/10 ZZ.

Les essais réalisés ont consisté en des tests de roulage destructif sur volant ; ce type de tests sur volant simule des essais sur circuit en ligne droite et de longue durée.

L'essai consiste en un test de roulage sur un volant, le pneu suivant un parcours en ligne droite. Les conditions de charge et de pressions sont les mêmes pour le pneumatique selon l'invention et le pneumatique de référence.

Le pneumatique selon l'invention a parcouru un kilométrage sensiblement supérieur à celui parcouru par le pneumatique de référence.

En outre, le pneumatique de référence a mis en évidence que l'altération subie se situe au niveau de l'armature de carcasse, dans la zone correspondant aux sollicitations cycliques évoquées précédemment en regard de l'extrémité axialement extérieure des couches additionnelles d'éléments de renforcement, parallèles entre eux dans la couche et orientés circonférentiellement.

## Revendications

1. Pneumatique (1) pour véhicule de type poids lourd, à armature de carcasse radiale (2) comprenant une armature de sommet (4) formée d'au moins deux couches de sommet de travail d'éléments de renforcement (41, 43), croisés d'une couche à l'autre en faisant avec la direction circonférentielle des angles compris entre 10° et 45°, elle-même coiffée radialement d'une bande de roulement, ladite bande de roulement étant réunie à deux bourrelets par l'intermédiaire de deux flancs, ledit pneumatique comprenant additionnellement dans chaque épaule au moins une extrémité d'une couche d'éléments de renforcement (45), parallèles entre eux dans la couche et orientés circonférentiellement, ladite extrémité de ladite couche d'éléments de renforcement, parallèles entre eux dans la couche et orientés circonférentiellement, étant axialement extérieure auxdites au moins deux couches de sommet de travail (41, 43), **caractérisé en ce que** les éléments de renforcement de l'armature de carcasse (2) sont des câbles à au moins deux couches présentant un diamètre inférieur à 0.85 mm, **en ce que** lesdits éléments de renforcement de l'armature de carcasse sont composés de fils de diamètre inférieur à 0.16 mm et **en ce qu'**au moins une couche interne des câbles à au moins deux couches de l'armature de carcasse (2) est gainée d'une couche constituée d'une composition polymérique telle qu'une composition de caoutchouc non réticulable, réticulable ou réticulée, de préférence à base d'au moins un élastomère diénique.

2. Pneumatique (1) selon la revendication 1, **caractérisé en ce que** les éléments de renforcement métalliques d'au moins une couche de l'armature de carcasse (2) sont des câbles, avantageusement non frettés, présentant au test dit de perméabilité un débit inférieur à 20 cm³/mn.

3. Pneumatique (1) selon l'une des revendications précédentes, **caractérisé en ce que,** dans un plan radial, le rapport entre les épaisseurs (D) de mélange caoutchouteux entre la surface intérieure (10) de la cavité (8) du pneumatique (1) et le point (17) d'un élément de renforcement métallique (11) de l'armature de carcasse (2) le plus proche de la dite surface intérieure (10) de la cavité, des deux parties (15) du profil du pneumatique, centrées sur les projections orthogonales respectives sur la surface intérieure de la cavité du pneumatique des extrémités axialement extérieures de la couche additionnelle d'éléments de renforcement (45), parallèles entre eux dans la couche et orientés circonférentiellement, et des parties du profil du pneumatique présentant les épaisseurs (E) les plus faibles est supérieur à 1.15

4. Pneumatique (1) selon l'une des revendications précédentes, **caractérisé en ce que** l'armature de sommet (4) comporte entre deux couches de sommet de travail (41, 43) au moins une couche d'éléments de renforcement circonférentiels (42).

5. Pneumatique (1) selon la revendication 4, **caractérisé en ce que** les éléments de renforcement de ladite au moins une couche d'éléments de renforcement circonférentiels (42) sont des éléments de renforcement métalliques présentant un module sécant à 0,7 % d'allongement compris entre 10 et 120 GPa et un module tangent maximum inférieur à 150 GPa.

6. Pneumatique (1) selon l'une des revendications précédentes, **caractérisé en ce que** l'armature de sommet (4) comporte en outre une couche de triangulation formée d'éléments de renforcement métalliques faisant avec la direction circonférentielle des angles supérieurs à 50° en valeur absolue.

7. Pneumatique (1) selon l'une des revendications précédentes, **caractérisé en ce que** l'armature de sommet (4) est complétée radialement à l'extérieur par au moins une couche supplémentaire (44), dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

## Patentansprüche

1. Luftreifen (1) für Schwerlastwagen mit radialer Karkassenbewehrung (2), der eine Scheitelbewehrung (4) enthält, die von mindestens zwei Arbeitsscheitelschichten von Verstärkungselementen (41, 43) gebildet wird, die sich von einer Schicht zur anderen kreuzen, indem sie mit der Umfangsrichtung Winkel zwischen 10° und 45° bilden, die selbst radial von einem Laufstreifen überdeckt wird, wobei der Laufstreifen mittels zweier Flanken mit zwei Wülsten verbunden ist, wobei der Luftreifen zusätzlich in jeder Schulter mindestens ein Ende einer Schicht von in der Schicht parallel zueinander liegenden und in Umfangsrichtung ausgerichteten Verstärkungselementen (45) enthält, wobei das Ende der Schicht von in der Schicht parallel zueinander liegenden und in Umfangsrichtung ausgerichteten Verstärkungselementen bezüglich der mindestens zwei Arbeitsscheitelschichten (41, 43) axial außen liegt, **dadurch gekennzeichnet, dass** die Verstärkungselemente der Karkassenbewehrung (2) Kabel mit mindestens zwei Schichten sind, die einen Durchmesser von weniger als 0,85 mm aufweisen, dass die Verstärkungselemente der Karkassenbewehrung aus Drähten mit einem Durchmesser von weniger als 0,16 mm zusammengesetzt sind, und dass mindestens eine innere Schicht der Kabel mit mindestens zwei Schichten der Karkassenbewehrung (2) von einer Schicht umhüllt ist, die aus einer Polymerzusammensetzung besteht, wie einer Zusammensetzung aus nicht vernetzbarem, vernetzbarem oder vernetztem Kautschuk, vorzugsweise auf der Basis von mindestens einem Dienelastomer.

2. Luftreifen (1) nach Anspruch 1, **dadurch gekennzeichnet, dass** die metallischen Verstärkungselemente mindestens einer Schicht der Karkassenbewehrung (2) vorzugsweise nicht bandagierte Kabel sind, die beim so genannten Permeabilitätstest einen Durchsatz von weniger als 20 cm³/mn aufweisen.

3. Luftreifen (1) nach einem der vorhergehenden Ansprüche, **dadurch gekennzeichnet, dass**, in einer radialen Ebene, das Verhältnis zwischen den Dicken (D) der Kautschukmischung zwischen der Innenfläche (10) des Hohlraums (8) des Luftreifens (1) und dem der Innenfläche (10) des Hohlraums am nächsten liegenden Punkt (17) eines metallischen Verstärkungselements (11) der Karkassenbewehrung (2), der zwei Teile (15) des Profils des Luftreifens, zentriert auf die jeweiligen orthogonalen Projektionen auf die Innenfläche des Hohlraums des Luftreifens der axial äußeren Enden der zusätzlichen Schicht von in der Schicht parallel zueinander liegenden und in Umfangsrichtung ausgerichteten Verstärkungselementen (45), und der Teile des Profils des Luftreifens, die die geringsten Dicken (E) aufweisen, größer als 1.15 ist.

4. Luftreifen (1) nach einem der vorhergehenden Ansprüche, **dadurch gekennzeichnet, dass** die Scheitelbewehrung (4) zwischen zwei Arbeitsscheitelschichten (41, 43) mindestens eine Schicht von Umfangsverstärkungselementen (42) aufweist.

5. Luftreifen (1) nach Anspruch 4, **dadurch gekennzeichnet, dass** die Verstärkungselemente der mindestens einen Schicht von Umfangsverstärkungselementen (42) metallische Verstärkungselemente sind, die einen Sekantenmodul bei 0,7% Dehnung zwischen 10 und 120 GPa und einen maximalen Tangentenmodul geringer als 150 GPa aufweisen.

6. Luftreifen (1) nach einem der vorhergehenden Ansprüche, **dadurch gekennzeichnet, dass** die Scheitelbewehrung (4) außerdem eine Triangulationsschicht aufweist, die von metallischen Verstärkungselementen geformt wird, die mit der Umfangsrichtung Winkel von mehr als 50° im Absolutwert bilden.

7. Luftreifen (1) nach einem der vorhergehenden Ansprüche, **dadurch gekennzeichnet, dass** die Scheitelbewehrung (4) radial außen von mindestens einer zusätzlichen Schicht (44), Schutzschicht genannt, von so genannten elastischen Verstärkungselementen vervollständigt wird, die bezüglich der Umfangsrichtung mit einem Winkel zwischen 10° und 45° und gleicher Richtung wie der Winkel ausgerichtet sind, der von den nicht dehnbaren Elementen der Arbeitsschicht gebildet wird, die ihr radial benachbart ist.

## Claims

1. - Tyre (1) for a heavy goods vehicle, having a radial carcass reinforcement (2) comprising a crown reinforcement (4) formed of at least two working crown layers of reinforcing elements (41, 43) that are crossed from one layer to another, forming angles of between 10° and 45° with the circumferential direction, said crown reinforcement itself being capped radially with a tread, said tread being joined to two beads by way of two sidewalls, said tyre additionally comprising, in each shoulder, at least one end of a layer of reinforcing elements (45) that are mutually parallel in the layer and are oriented circumferentially, said end of said layer of reinforcing elements that are mutually parallel in the layer and are oriented circumferentially is axially outside said at least two working crown layers (41, 43), **characterized in that** the reinforcing elements of the carcass reinforcement (2) are cords comprising at least two layers having a diameter less than 0.85 mm, and **in that** said reinforcing elements of the carcass reinforcement are made up of threads with a diameter less than 0.16 mm and **in that** at least one inner layer of the cords comprising at least two layers of the carcass reinforcement (2) is sheathed with a layer consisting of a polymer composition, such as a non-crosslinkable, crosslinkable or crosslinked rubber composition, preferably based on at least one diene elastomer.

2. Tyre (1) according to Claim 1, **characterized in that** the metal reinforcing elements of at least one layer of the carcass reinforcement (2) are cords, advantageously non-wrapped cords, that return a flow rate less than 20 cm³/min in what is referred to as the permeability test.

3. Tyre (1) according to one of the preceding claims, **characterized in that,** in a radial plane, the ratio between the thicknesses (D) of rubber compound between the inner surface (10) of the tyre cavity (8) and that point (17) of a metal reinforcing element (11) of the carcass reinforcement (2) that is closest to said inner surface (10) of the cavity, of the two parts (15) of the tyre profile that are centred on the respective orthogonal projections onto the inner surface of the tyre cavity of the axially outer ends of the additional layer of reinforcing elements (45) that are mutually parallel in the layer and are oriented circumferentially, and of the parts of the tyre profile that have the smallest thicknesses (E), is greater than 1.15.

4. Tyre (1) according to one of the preceding claims, **characterized in that** the crown reinforcement (4) comprises at least one layer of circumferential reinforcing elements (42) between two working crown layers (41, 43).

5. Tyre (1) according to Claim 5, **characterized in that** the reinforcing elements of said at least one layer of circumferential reinforcing elements (42) are metal reinforcing elements that have a secant modulus at 0.7% elongation of between 10 and 120 GPa and a maximum tangent modulus of less than 150 GPa.

6. Tyre (1) according to one of the preceding claims, **characterized in that** the crown reinforcement (4) further includes a triangulation layer formed of metal reinforcing elements that form angles of more than 50° in absolute terms with the circumferential direction.

7. Tyre (1) according to one of the preceding claims, **characterized in that** the crown reinforcement (4) is supplemented radially on the outside by at least one additional layer (44), referred to as a protective layer, of reinforcing elements, referred to as elastic reinforcing elements, that are oriented with respect to the circumferential direction at an angle of between 10° and 45° and in the same direction as the angle formed by the inextensible elements of the working layer which is radially adjacent thereto.
